Europäisches Patentamt

European Patent Office

Office européen des brevets

(19)

(11) **EP 0 731 156 A2**

(12) **EUROPEAN PATENT APPLICATION**

(43) Date of publication:
**11.09.1996 Bulletin 1996/37**

(51) Int Cl.$^6$: **C10G 45/50**, B01J 23/85

(21) Application number: **96301727.2**

(22) Date of filing: **07.03.1996**

(84) Designated Contracting States:
**DE FR GB IT NL**

(30) Priority: **09.03.1995 US 401374**

(71) Applicant: **TEXACO DEVELOPMENT CORPORATION**
**White Plains, New York 10650-001 (US)**

(72) Inventor: **Sudhakar, Chakka**
**Fishkill, New York 12524 (US)**

(74) Representative: **Watkins, David**
**Urquhart-Dykes & Lord,**
**91 Wimpole Street**
**London W1M 8AH (GB)**

(54) **Process for hydrodearomatization of hydrocarbon oils using carbon supported metal sulfide catalysts promoted by zinc**

(57) A process for treating a charge hydrocarbon feed containing undesired aromatics, sulphur and nitrogen comprises:

maintaining a sulphided catalyst bed comprising 0.1-15% by weight of one or more Group VIII metals selected from nickel, cobalt and iron; from 1-50% by weight of tungsten and/or from 1-20% by weight of molybdenum or chromium, and 0.01-10% by weight of zinc, on an activated carbon support, said support having a B.E.T. surface area of at least 600 m$^2$/g, a pore volume of at least 0.3 cm$^3$/g and an average pore diameter of at least 12 Angstroms;

passing a charge hydrocarbon feed in the presence of a gas comprising greater than 60% by volume pure hydrogen into contact with said catalyst under hydrotreating conditions, thereby effecting hydrogenation, hydrodearomatisation, hydrodesulphurisation and hydrodenitrogenation of said feed and forming a hydrocarbon product stream containing a lesser concentration of undesired aromatics, sulphur and nitrogen, and recovering said product stream.

EP 0 731 156 A2

## Description

This invention relates to a hydroprocessing catalyst composition comprising zinc, a Group VIB metal and a Group VIII metal, on a high surface area carbon support, useful after sulphiding for hydrodesulphurisation (HDS), hydrodenitrogenation (HDN), hydrodeoxygenation (HDO), hydrodearomatisation (HDAr), hydrogenation (HYD), hydrofining, hydrodemetallisation, mild hydrocracking, and for other hydroprocessing reactions such as improving the hydrogen to carbon ratio, API gravity, colour etc. of hydrocarbon oils. Promotion with zinc significantly improved the hydrodearomatisation and hydrodenitrogenation activities of sulphided carbon supported Group VIB and Group VIII metal catalysts.

This invention also relates to a process for catalytic HDS, HDN and HDAr of gas oils, middle distillates and naphthas using the sulphided, zinc-containing Group VIB and Group VIII metal catalysts supported on activated carbon, to produce low heteroatom- and low aromatics-containing hydrocarbon oils with substantially improved hydrogen to carbon ratio. Substantial HDS is also simultaneously accomplished along with HDAr and HDN over these catalysts, which is highly desirable.

With their high hydrogenation activities, these improved carbonsupported catalysts are valuable for hydroprocessing in general and for the production of low aromatic gasoline, kerosene and diesel fuel in particular. This invention is useful for hydrotreating/hydroprocessing/hydrofining various hydrocarbon feedstocks such as naphthas, middle distillates, gas oils, vacuum gas oils and resids, derived from any source such as petroleum, coal, oil shale, tar sands, and oil sands. The catalysts and process of this invention are also particularly useful for the hydrotreatment/hydroprocessing of hydrocarbon feeds before they are processed further by hydrocracking or by fluid catalytic cracking.

Aromatic hydrocarbons in fuels such as gasoline or diesel oil represent a source of atmospheric pollution. The aromatic content of middle distillates may be as high as 85% by volume. A typical light straight run gas oil may, for example, contain about 30% by volume of aromatics. As environmental considerations become of greater concern, it is desirable to treat hydrocarbons such as naphthas and middle distillate hydrocarbons to reduce their content of undesirable aromatic components. Noble metal catalysts, which are excellent for aromatics saturation, quickly become poisoned by the sulphur and nitrogen compounds present in typical hydrocarbon feedstocks, losing their hydrogenation activity in a short time. Therefore, noble metal catalysts cannot be used for a one-step process for hydrodearomatising these fuel feedstocks. Since the prior art hydroprocessing catalysts, typified by sulphided, aluminasupported cobalt/nickel/molybdenum/tungsten, sometimes promoted by phosphorus or fluorine, do not have the catalytic activities necessary for producing a product having a very low aromatic content, it is desirable to find a hydrotreating catalyst with high aromatics saturation activity.

As the need grows to process heavier crudes containing larger concentrations of sulphur and nitrogen compounds, hydroprocessing catalysts with improved HDN activity become more desirable. The adverse effects of nitrogen compounds on the catalytic activities of various catalysts for several different process including HDS, hydrocracking and fluid catalytic cracking are well known to those familiar with the art. A catalyst with high HDN and HDAr activity, if used for the hydrotreatment hydrocracker or fluid catalytic cracker feeds, would not only significantly improve the hydrocracking and fluid catalytic cracking operations, but would also facilitate the production of environmentally friendly and more valuable fuel products.

United States Patent No. 2,608,521 is directed to an improved process for the desulphurisation of sulphur bearing hydrocarbon oils using so-called "sulphactive" hydrogenation catalysts. The catalysts can consist of oxides or sulphides of the transition metals, with or without stabilisers and promoters such as the oxides and carbonates of a very large selection of metals, in combination with a large selection of various conventional supporting materials.

United States Patent No. 3,367,862 is directed to desulphurisation of heavy residual hydrocarbons by hydrolysis with water in the presence of catalyst on a charcoal base.

United States Patent No. 3,546,103 is directed to the removal of metals and coke from hydrocarbon resids by use of, as pre-catalyst, metals of Group IIB or Group VIB plus Group VIII, on charcoal.

United States Patent No. 3,812,028 is concerned with "hydrotreating" fossil fuels containing polynuclear aromatics such as asphaltenes, for converting the components boiling above 1000°F (538°C) to products boiling below 1,000°F (538°C) by the use of Group VI and/or Group VIII metals on carbon, at a hydrogen partial pressure in excess of 2,200 psig (15.2 MPa) and at a temperature between 750°F and 850°F (399°C and 454°C).

United States Patent Nos. 3,997,473 and 4,032,435 are directed to hydrodesulphurisation of petroleum residues by use of a catalyst comprising cobalt/nickel/molybdenum/tungsten on a carbon support, the carbon support being characterised by an average pore radius of at least 25 Angstroms and a Brunauer-Emmett-Teller (B.E.T.) surface area of 200-800 m²/g. The catalyst of these patents has a loading of Group VIB metal of at least 10 and up to about 20 % by weight expressed as metal oxide based on the weight of the catalyst support.

United States Patent No. 4,082,652 is directed to treatment of heavy oils, to effect hydrodesulphurisation by use of a molybdenum/nickel or molybdenum/cobalt on carbon catalyst. The catalyst preparation requires that the molybdenum be deposited first, then sulphided, and only then that the nickel or cobalt be added.

United States Patent No. 4,176,051 is directed to a process for catalytically hydrocracking a heavy hydrocarbon oil, wherein the heavy hydrocarbon oil is slurried with a particulate catalyst mass comprising aluminium compound coated coal and/or coke particles which may also be coated with a cobalt and/or a molybdenum compound, and then reacted with hydrogen.

United States Patent No. 4,313,582 is directed to hydrotreating, particularly of coal liquids, in the presence of a sulphided molybdenum or tungsten on active carbon, with or without a second metallic component. In such catalysts, the metal sulphides exist substantially completely on the outer surface of the active carbon support. The preparation of carbon supported catalyst according to this document must involve direct deposition of metal sulphides on the carbon support and their subsequent reduction to lower valent sulphides.

In United States Patent No. 4,755,496 there is disclosed a catalyst composition obtained by compositing an inorganic oxide support with one or more precursor salts and heating said composite at an elevated temperature of at least about 150°C in the presence of sulphur and under oxygen-free conditions for a time sufficient to form a catalyst. The precursor salt contains a thiometallate anion of Mo, W or a mixture thereof and one or more divalent promoter metal cations which are chelated by at least one neutral, nitrogen-containing polydentate ligand. The divalent promoter metal cations are selected from Ni, Co, Zn, Cu and mixtures thereof.

United States Patent No. 5,010,049 discloses a composition comprising a support and a catalyst having an overall stoichiometry of $M_{2x}A_{1-x}S_2$ wherein $0.001 \leq x \leq 0.5$, and wherein M is at least one member selected from Co, Fe, Ni, Cu, Zn, Mn and Ru, and A is either Mo or W, wherein said catalyst is obtained by mixing elemental M, elemental A and elemental S in specified proportions, followed by heating the mixture in the absence of oxygen to a temperature from 200°C to 800°C.

There is a continuing need in the art for catalysts which demonstrate improved hydrodearomatisation and HDN of hydrocarbon oils. It would be extremely valuable if a catalyst which performed better with respect to hydrodearomatisation and HDN were capable of simultaneously eliminating sulphur.

In accordance with a first aspect, the invention is a process for treating a charge hydrocarbon feed containing undesired aromatic components, sulphur and nitrogen compounds, which process comprises:

maintaining a bed of sulphided catalyst comprising 0.1 to 15% by weight of one or more non-noble Group VIII metals selected from nickel, cobalt and iron; from 1 to 50% by weight of tungsten and/or from 1 to 20% by weight of molybdenum or chromium, and 0.01 to 10% by weight of zinc, on an activated carbon support, said activated carbon support having a Brunauer-Emmett-Teller (B.E.T.) surface area of at least 600 m$^2$/g, a pore volume for nitrogen of at least 0.3 cm$^3$/g and an average pore diameter of at least 12 Angstroms;
passing a charge hydrocarbon feed in the presence of hydrogen into contact with said sulphided catalyst at hydrotreating conditions thereby effecting hydrogenation, hydrodearomatisation, hydrodesulphurisation and hydrodenitrogenation of said charge hydrocarbon feed and forming a product stream of hydrocarbon containing lesser concentrations of undesired aromatic components, sulphur and nitrogen, and
recovering said product stream of hydrocarbon containing lesser concentrations of undesired aromatic components, sulphur and nitrogen.

The charge hydrocarbons which may be treated by the process of this invention include those which are commonly designated as naphthas, middle distillates or other heavier hydrocarbon feedstocks such as gas oils, vacuum gas oils, residua, shale oils, coal liquids, sand oils, etc., and mixtures thereof. Naphthas, middle distillates and gas oils produced from fluid catalytic crackers, steam crackers and delayed cokers, which are sometimes called cracked feedstocks, may also be included as charge hydrocarbons for this invention, in addition to diesel fuels, aviation fuels, or mixtures thereof. Typically, naphthas may have an initial boiling point (IBP) of at least about 70°F (21°C), most particularly about 90-200°F (27-93°C). The charge middle distillates may have an IBP of at least about 300°F (149°C), and commonly about 300-480°F (149-249°C).

These charge hydrocarbons may include light, full range or heavy naphtha (IBP of 70-200°F (21-93°C)), kerosene (IBP of 300-340°F (149-171°C)), light gas oil (IBP of 340-480°F (171-249°C)), heavy gas oil, vacuum gas oils, residua etc.

Many middle distillates may have an aromatic content as high as 80 % by volume, typically 20-50% by volume, say 25-40% by volume. In addition to the undesired aromatic components, they may contain other undesirables such as sulphur (0.1-5% by weight, typically 1-4% by weight) and nitrogen (10-5,000 ppm by weight, typically 0.001-0.2% by weight). Heavier feeds may contain substantially more nitrogen.

A typical charge which may be treated by the process of this invention may be a light atmospheric gas oil (LAGO) having the following properties:

3

Table I:

| Properties of LAGO | |
|---|---|
| API Gravity | 32° |
| IBP (ASTM D-86) | 197°C |
| 10% | 263°C |
| 50% | 299°C |
| 90% | 344% |
| EP (End Point) | 360°C |
| Sulphur (wt%) | 0.71 |
| Nitrogen (ppm wt.) | 500 |
| Aromatics (wt%) (ASTM D-5186) | 32 |

In practice of the process of this invention, the charge may be admitted to the catalyst bed at about 200-450°C, preferably at 300-410°C, most preferably about 380°C, and 200-3,000 psig (1.4-21 MPa), preferably 400-2,500 psig (2.8-17.3 MPa). Hydrogen is admitted at a flow rate of 200-10,000 SCFB (standard cubic feet per barrel) (36-1800 m$^3$/m$^3$), preferably 1,000-6,000 SCFB (180-1080 m3/m3), most preferably about 4,000 SCFB (720 m$^3$/m$^3$). Gas mixtures wherein hydrogen is the major component, for example higher than about 60% by volume, may be employed instead of pure hydrogen gas. LHSV (liquid hourly space velocity) based on catalyst volume may be 0.1-10, preferably 0.5-4, most preferably about 2.5.

The process of the present invention can be effected in any type of reactor system such as fixed bed reactor system, ebullated bed reactor system, fluidised bed reactor system, moving bed, or slurry reactor system. For naphthas, gas oils and middle distillates, it is preferred to use extrudates, pellets, spheres or granules of the catalyst in a fixed bed reactor system.

In accordance with a second aspect, the invention comprises a catalyst composition useful for hydrotreatment of hydrocarbon oils, said catalyst composition comprising:

0.1 to 15% by weight of one or more non-noble Group VIII metals selected from nickel, cobalt and iron; from 1 to 50% by weight of tungsten and/or from 1 to 20% by weight of molybdenum or chromium, and 0.01 to 10% by weight of zinc, on an activated carbon support, said activated carbon support having a B.E.T. surface area of at least 600 m$^2$/g, a pore volume for nitrogen of at least 0.3 cm$^3$/g and an average pore diameter of at least 1 2 Angstroms.

Preferably, the activated carbon support has a B.E.T. surface area from 600 to 2000 m$^2$/g, an average pore diameter from 12 to 100 Angstroms and is further characterised in that 20-80% of its pore volume comprises pores of 20-500 Angstroms diameter.

The supported catalyst of this invention is preferably prepared on an activated carbon support. All carbons with B.E.T. surface areas of generally more than 600 m$^2$/g, derived from any raw material such as coal, wood, peat, lignite, coconut shell, olive pits, synthetic polymers, coke, petroleum pitch, coal tar pitch, etc., are suitable as catalyst supports for the catalysts of the present invention. Carbon is generally characterised as "activated" if it contains an intricate network of internal porosity arising from the activation process.

The activated carbon support used for making the catalysts of this invention can exist in any physical form including, but not limited to powder, granules, pellets, spheres, fibres, monolith, or extrudates. It may contain a small concentration of phosphorus of the order of about 2% by weight or less, as a consequence of the process by which it is manufactured. It may also contain one or more refractory inorganic oxides as minor components which may arise as a result of the carbon's inherent composition (ash), or as a result of using some binding materials for forming (or shaping) the carbon material, total of these less than about 30 % by weight.

Expressed as elemental zinc, zinc can exist in an amount from 0.01 to 10% by weight of the total catalyst, preferably from about 0.1 to 5% by weight. In general, any known inorganic, organic or organometallic zinc compounds can be used as precursors for zinc in the final catalyst. Suitable zinc compounds include, but are not limited to, zinc nitrate, zinc sulphate, zinc acetate, zinc tetrafluoroborate and zinc chloride.

As indicated above, the B.E.T. total surface area of the carbon support should be at least 600 m$^2$/g, and typically

between 600 m$^2$/g and 2,000 m$^2$/g. A preferred range is between 600 to 1600 m$^2$/g. Within these parameters 800-1500 m$^2$/g is a particularly useful range and the examples demonstrate 1100 to 1300 m$^2$/g. The Total Pore Volume (TPV) of the carbon support for nitrogen is at least 0.3 cm$^3$/g, preferably from 0.4-1.2 cm$^3$/g, most especially 0.8 cm$^3$/g. The Average Pore Diameter by nitrogen physisorption should be at least 12 Angstroms, preferably in the range 12-100 Angstroms, most preferably 16-50 Angstroms, and most especially 25 Angstroms. Preferably, 20-80% of the total pore volume of the carbon support should exist in pores in the mesopore range (20-500 Angstroms diameter).

Suitable commercially-available carbon pellets, granules or extrudates which may be used as catalyst supports in fixed beds in the practice of the process of this invention may include:

A. A commercially-available activated carbon known by the brand name, Nuchar BX-7530 carbon obtained from the Westvaco Company as 1/8" (3.2 mm) pellets, having a B.E.T. surface area of 1128 m$^2$/g, a total pore volume (TPV) of 0.82 cm$^3$/g (for nitrogen), Average Pore Diameter estimated using the Wheeler equation:

$$\text{Average Pore Diameter (Å)} = \frac{[40,000 \times \text{TPV (cm}^3\text{/g)}]}{\text{Surface Area (m}^2\text{/g)}}$$

of 29.2 Angstroms calculated from nitrogen physisorption data, an apparent bulk density of 0.37 g/cm$^3$ and an ash content of less than 7% by weight.

B. The Norit RX carbon (of the Norit Company) acid-washed extrudate (0.8 mm diameter) having a B.E.T. surface area of 1474 m$^2$/g, a TPV of 0.79 cm$^3$/g (for nitrogen), Average Pore Diameter of 21.4 Angstroms, an apparent bulk density of 0.41 g/cm$^3$ and an ash content of less than 4% by weight.

C. The Norit R carbon (of the Norit Company) extrudate (3 mm diameter) having a B.E.T. surface area of 1217 m$^2$/g, a TPV of 0.67 cm$^3$/g (for nitrogen), Average Pore Diameter of 22 Angstroms and an apparent bulk density of 0.41 g/cm$^3$.

The desired hydrogenation, hydrodearomatisation, HDS and HDN of hydrocarbons according to this invention is accomplished by use of a catalyst prepared from a carbon support characterised by a B.E.T. surface area of at least 600 m$^2$/g, by a Total Pore Volume of at least 0.3 cm$^3$/g, and by an average Pore Diameter of at least 12 Angstroms which has deposited thereon 1-50% by weight of Group VIB metal, 0.1-15% by weight of non-noble Group VIII metal, and 0.01-10% by weight zinc, based on the final catalyst weight. The catalysts of the present invention can also contain additional promoters such as phosphorus, boron or fluoride, at 0.01% to 4% by weight, calculated as elemental phosphorus, boron or fluoride respectively, based on the total catalyst weight.

The catalytic metals may be deposited on the carbon in the form of inorganic, organic or organometallic compounds of the metals, either sequentially or simultaneously, by various processes known in the art. Such processes include incipient wetness impregnation, equilibrium adsorption etc., from aqueous or non-aqueous media, or from vapour phase using volatile compounds of the metals. The catalysts can also be prepared by solid stage synthesis techniques, such as grinding together the support and the metal compounds in a single step or in multiple steps, with suitable heat treatments.

It is to be noted that, in the as-prepared catalysts, the deposited metals such as Cr, Mo, W, Ni, Fe, Co and Zn exist as oxides or as partially decomposed metal compounds which are precursors to the oxides. All the metals and the zinc promoter can be deposited in any order on the carrier, either in a single step or in multiple steps via solid state techniques, gas phase or solution impregnation from aqueous or non-aqueous media, with suitable heat treatment in between.

The chromium and/or molybdenum together can constitute from 1 to 20% by weight, expressed as elemental chromium or molybdenum, based on the final catalyst weight. The preferred range is 5-18% by weight, particularly from 10-15%, most especially 12% by weight. The tungsten can constitute 1-50% by weight, preferably 10-45% by weight, particularly from 30-40% and most especially 33% by weight, expressed as elemental tungsten, based on the final catalyst weight. Tungsten is the preferred Group VIB metal. More than one Group VIB metal can be present in the catalyst.

The non-noble Group VIII metal may preferably be one or more metals selected from cobalt, iron or nickel. The final catalyst can constitute 0.1-15% by weight selected from one or more of nickel, cobalt and iron. The preferred range for the one or more metals selected nickel, iron or cobalt is from 2 to 12% by weight, particularly from 5 to 9%, most especially 7% by weight, expressed as elemental cobalt, iron or nickel, based on final catalyst weight. Nickel is the preferred non-noble Group VIII metal.

Preferably, the Group VIB metal is loaded onto the catalyst support from an aqueous solution of ammonium metatungstate for tungsten, and ammonium heptamolybdate for molybdenum. The Group VIII non-noble metal is preferably loaded onto the catalyst support from an aqueous solution of nickel nitrate hexahydrate.

Although the Group VIB and Group VIII metals and zinc may be deposited on the catalyst support in any order, either in a single step or in multiple steps, it is preferable to deposit the Group VIB metal first, and then zinc along with the Group VIII metal in the final step.

In a preferred embodiment, the carbon pellet support is contacted with an aqueous solution of a salt of the Group VIB metal, preferably ammonium metatungstate, $(NH_4)_6H_2W_{12}O_{40}$, in an amount sufficient to fill the pores to incipient wetness. The support bearing the Group VIB metal is typically allowed to stand at room temperature for 0.5-4 hours, say 2 hours, and then heated in air or inert atmosphere at a rate of 0.3 °C/min to 115 °C, maintained at that temperature for 12-48 hours, say 24 hours, and then cooled to room temperature over 2-6 hours, say 3 hours. Temperatures higher than 115°C may be employed, but are limited to about 500°C. Multiple impregnation may be employed to prepare catalysts with desired Group VIB metal loading.

Thereafter, the support bearing the Group VIB metal is contacted with an aqueous solution containing the non-noble Group VIII metal, preferably nickel nitrate, and zinc, preferably zinc nitrate, in an amount sufficient to fill the pores to incipient wetness. The support bearing Group VIB metal, Group VIII metal and zinc is typically allowed to stand at room temperature for 0.5-4 hours, say 2 hours, and then heated in air or inert atmosphere at a rate of 0.3°C/min to 115°C, maintained at that temperature for 12-48 hours, say 24 hours and then cooled to room temperature over 2-6 hours, say 3 hours. Temperatures higher than 115°C may be employed, but are limited to about 500°C. Again, multiple impregnations may be employed to prepare catalysts with desired Group VIII metal and zinc loadings.

The catalyst so prepared contains 1-50 % by weight, preferably 5-18% by weight, most preferably 12% by weight, of molybdenum or chromium as the Group VIB metal (measured as metal); 0.1-15% by weight, preferably 2-12% by weight, most preferably 7% by weight, of Group VIII metal (measured as metal); and 0.01-10 % by weight, preferably 0.1-5% by weight, and particularly from 2-4% by weight, most preferably 3% by weight of zinc (measured as metal). When the VIB metal is the preferred tungsten, it may be present in an amount from 1-50% by weight, preferably 10-45% by weight, most preferably 33% by weight.

In a typical process according to the present invention, the catalyst bearing zinc, Group VIB and non-noble Group VIII metals is loaded into a hydrotreating reactor and sulphided *in situ* to convert the zinc, Group VIB and Group VIII metal compounds to their respective sulphides to a significant extent.

The catalyst sulphiding can be accomplished using any method know in the art, such as by heating it in a stream of hydrogen sulphide in hydrogen or by flowing an easily-decomposable sulphur compound such as carbon disulphide or dimethyl disulphide in a hydrocarbon solvent over the catalyst at elevated temperatures up to, but not limited to, 450°C at atmospheric or higher pressures, in the presence of hydrogen gas for 2-24 hours, say 3 hours.

Alternatively, the catalyst sulphiding can be effected by the sulphur compounds present in the hydrocarbon charge itself which is being hydrotreated. The catalyst can also be presulphided outside the reactor, suitably passivated and then loaded into the reactor. After sulphiding, the hydrocarbon charge is passed through the catalyst bed together with hydrogen gas at pressures ranging from 200-3000 psig (1.4-21 MPa) and temperatures ranging from 200-450°C at liquid hourly space velocities (LHSV) ranging from 0.1 to 10. Pure hydrogen gas or recycle gas containing largely hydrogen can be used at flow rates ranging from 200-10000 SCFB (36-1800 $m^3/m^3$).

*Ex-situ* sulphiding can be accomplished using any of the known techniques described in literature. If sufficient sulphur is incorporated into the catalyst using one of these *ex-situ* presulphiding techniques, activation of the catalyst may be accomplished by heating the catalyst in hydrogen flow in the reactor itself.

Practice of the process of this invention can be carried out by passing the charge hydrocarbon into contact with the sulphided catalyst at 200-450°C, and particularly from about 350-400°C, say 380°C and 200-3,000 psig (1.4-21 MPa), particularly from about 1000-1600 psig (6.9-11 MPa), say 1,500 psig (10.4 MPa), at LHSV (based on catalyst volume) of 0.1-10, say 2.0, with hydrogen gas flow rates of 200-10,000 SCFB (36-1800 $m^3/m^3$), say 4,000 SCFB (720 $m^3/m^3$). Gas mixtures wherein hydrogen is the major component, i.e. higher than about 60% by volume, may be employed instead of pure hydrogen gas.

During hydrodearomatisation, it is found that the aromatic content may be decreased from a charge content of 25-40% by weight, say 32% by weight, down to a product of 10-16 % by weight, say 13 % by weight. For example, in the case of a light atmospheric gas oil (LAGO) containing 32 % by weight aromatics, this content may be reduced to approximately 15 % by weight in a typical operation. Most of the sulphur and nitrogen present in the hydrocarbon charge may also be eliminated during the process of the present invention.

A particularly advantageous application of the catalyst and process of the present invention is for the hydroprocessing of the hydrocracker charge or the fluid catalytic cracker charge. When the hydrocracker charge or the fluid catalytic cracker charge is hydroprocessed using the catalysts and process of the present invention, products containing very low levels of sulphur and nitrogen are achieved along with significantly reduced aromatics concentration.

Practice of the process of this invention will be apparent to those skilled in the art from the following examples in which relative proportions are expressed in parts by weight unless otherwise stated. An asterisk (*) indicates a control example. The activated carbon support used to prepare the catalysts in the following examples is the commercially-available activated carbon known by the brand name Norit RX carbon (of the Norit Company) acid-washed extrudate (0.8 mm diameter) having a B.E.T. surface area of 1474 $m^2/g$, a TPV of 0.79 $cm^3/g$ (for nitrogen), Average Pore Diameter estimated using the Wheeler equation:

$$\text{Average Pore Diameter (Å)} = \frac{[40{,}000 \times \text{TPV (cm}^3\text{/g)}]}{\text{Surface Area (m}^2\text{/g)}}$$

of 21.4 Angstroms calculated from nitrogen physisorption data, an apparent bulk density of 0.41 g/cm$^3$ and an ash content of less than 4 % by weight.

## EXAMPLE 1

### PREPARATION OF (Ni+Zn) -Mo/Carbon CATALYST (CATALYST C1)

**Step 1:** 24.5 parts of ammonium heptamolybdate (AHM) were dissolved in 58 parts of deionised water. 80 parts of the support carbon were impregnated with this solution to incipient wetness. The impregnated material was left at room temperature with occasional stirring for 2 hours. It was then heated slowly at a rate of 0.3°C/min to 115°C in an oven in air, was left at that temperature for 24 hours, and was cooled slowly at room temperature for 3 hours.

**Step 2:** One half of the total material from Step 1 above was impregnated to incipient wetness with a solution made up of 13.8 parts of nickel (II) nitrate hexahydrate (Ni nitrate) and 8.3 parts of zinc (II) nitrate hexahydrate (Zn nitrate) in 17 parts of deionised water. The impregnated material was heat treated in the same way as in Step 1.

The resulting material is referred to as Catalyst C1. If all the AHM, Ni nitrate and Zn nitrate were decomposed to the respective oxides, then Catalyst C1 would contain nominally 12% by weight Mo, 5% by weight Ni and 3% by weight zinc, based on the final catalyst weight.

## EXAMPLE 2* (CONTROL)

### PREPARATION OF Ni-Mo/Carbon CATALYST (CATALYST C2*)

**Step 1:** 24.5 parts of AHM were dissolved in 60 parts of deionised water. 80 parts of the carbon were impregnated with this solution to incipient wetness. The impregnated material was left at room temperature with occasional stirring for 2 hours. It was then heated slowly at a rate of 0.3°C/min to 115°C in an oven in air, left at that temperature for 24 hours and cooled slowly to room temperature in 3 hours.

**Step 2:** The material from Step 1 above was impregnated to incipient wetness with a solution made up of 44.1 parts of nickel (II) nitrate hexahydrate (Ni nitrate) in 30 parts of deionised water. The impregnated material was heat treated in the same way as in Step 1.

The resulting material is referred to as Catalyst C2*. If all the AHM and Ni nitrate were decomposed to the respective oxides, then Catalyst C2* would contain nominally 12% by weight Mo and 8% by weight Ni, based on the final catalyst weight.

## EXAMPLE 3* (CONTROL)

### PREPARATION OF Ni-Mo/Carbon CATALYST (CATALYST C3*)

**Step 1**: 24.5 parts of AHM were dissolved in 60 parts of deionised water. 80 parts of the carbon were impregnated with this solution to incipient wetness. The impregnated material was left at room temperature with occasional stirring for 2 hours. It was then heated slowly at a rate of 0.3 °C/min to 115°C in an oven in air, left at that temperature for 24 hours and cooled slowly to room temperature in 3 hours.

**Step 2:** 67% of the total product material from Step 1 above was impregnated to incipient wetness with a solution made up of 18 parts of Ni nitrate in 30.5 parts of deionised water. The impregnated material was heat treated in the same way as in Step 1.

The resulting material is referred to as Catalyst C3*. If all the AHM and Ni nitrate were decomposed to the respective oxides, Catalyst C3* would contain nominally 12% by weight Mo and 5% by weight Ni, based on the final catalyst weight.

## EXAMPLE 4

### PREPARATION OF (Ni+Zn)-(W+B)/Carbon CATALYST (CATALYST C4)

**Step 1**: 26.8 parts of ammonium metatungstate ($(NH_4)_6H_2W_{12}O_{40}$) were dissolved in 22.5 parts of deionised water together with 2.25 parts of ammonium tetraborate tetrahydrate. 30 parts of carbon support were impregnated with this solution to incipient wetness. The impregnated material was left at room temperature with occasional stirring for 2 hours. It was then heated slowly at a rate of 0.3°C/min to 130°C in an oven in air, was left at that temperature for 24 hours and was cooled slowly to room temperature in 3 hours.

**Step 2:** The material from Step 1 above was impregnated to incipient wetness with a solution made up of 14.6 parts of nickel (II) nitrate hexahydrate (Ni nitrate) and 5.8 parts of zinc (II) nitrate hexahydrate (Zn nitrate) in 15.5 parts of deionised water. The impregnated material was heat treated in the same way as in Step 1.

The resulting material is referred to as Catalyst C4. If all the ammonium metatungstate, ammonium tetraborate, Ni nitrate, and Zn nitrate were decomposed to the respective oxides, then Catalyst C4 would contain nominally 33% by weight W, 0.6% by weight boron, 5% by weight Ni and 2% by weight zinc, based on the final catalyst weight.

**EXAMPLE 5* (CONTROL)**

**PREPARATION OF Ni-(W+B)/Carbon CATALYST (CATALYST C5*)**

**Step 1**: 26.8 parts of ammonium metatungstate $(NH_4)_6H_2W_{12}O_{40}$) were dissolved in 22.5 parts of deionised water together with 2.25 parts of ammonium tetraborate tetrahydrate. 30 parts of carbon support were impregnated with this solution to incipient wetness. The impregnated material was left at room temperature with occasional stirring for 2 hours. It was then heated slowly at a rate of 0.3°C/min to 130°C in an oven in air, was left at that temperature for 24 hours and was cooled slowly to room temperature in 3 hours.

**Step 2:** The material from Step 1 above was impregnated to incipient wetness with a solution made up of 17.5 parts of nickel (II) nitrate hexahydrate (Ni nitrate) in 16 parts of deionised water. The impregnated material was heat treated in the same way as in Step 1.

The resulting material is referred to as Catalyst C5*. If all the ammonium metatungstate, ammonium tetraborate and Ni nitrate were decomposed to the respective oxides, then Catalyst C5* would contain nominally 33% by weight W, 0.6% by weight boron and 6% by weight Ni, based on the final catalyst weight.

Table II:

| | Summary of Catalyst Examples | | | | | |
|---|---|---|---|---|---|---|
| CATALYST | CATALYST DESCRIPTION | wt % Mo | wt % W | wt % Ni | wt % B | wt % Zn |
| C1 | (Ni + Zn)-Mo/Carbon | 12 | 0 | 5 | 0 | 3 |
| C2* | Ni-Mo/Carbon | 12 | 0 | 8 | 0 | 0 |
| C3* | Ni-Mo/Carbon | 12 | 0 | 5 | 0 | 0 |
| C4 | (Ni + Zn)-(W + B)/Carbon | 0 | 33 | 5 | 0.6 | 2 |
| C5* | Ni-(W + B)/Carbon | 0 | 33 | 6 | 0.6 | 0 |

EVALUATION OF CATALYSTS

Catalysts C1, C2*, C3*, C4 and C5* were evaluated for their Hydrodesulphurisation (HDS), Hydrodenitrogenation (HDN) and Hydrodearomatisation (HDAr) activities in a standard hydrotreating reactor system using techniques well known to those familiar with the art. In a typical experiment, 20 cm³ of the catalyst was loaded into the hydrotreating reactor of 12 mm ID and 400 mm length. After purging oxygen from the reactor, 100 cm³/min of a sulphiding gas (10% $H_2S$ in hydrogen) was passed over the catalyst for 15 minutes at room temperature at 1 atmosphere (0.1 MPa) pressure. With the sulphiding gas flowing, the temperature of the reactor was increased at 3°C/min to 350°C and kept at the sulphiding temperature of 350°C for 2 hours. The temperature of the reactor was then changed to the reaction temperature, and the sulphiding gas maintained. At this point, a back pressure of about 100-400 psig (0.7-2.8 MPa) was applied to the reactor and the liquid feed flow was started at the desired rate. Once the liquid had passed beyond the catalyst bed, the flow of the sulphiding gas was cut off. The flow of hydrogen was then started at the desired rate and the reactor pressure was increased to the desired value. The actual hydrotreating reaction was considered to have started at this point of time.

After about 20 hours on stream, the liquid product samples were collected and sparged with hydrogen gas to remove the dissolved $H_2S$ and $NH_3$ gases before they were analysed for their sulphur, nitrogen and aromatics contents. The extent of sulphur removal (%HDS), nitrogen removal (%HDN) and aromatics saturation (%HDAr) was calculated from these analyses.

The liquid feed used for all the experiments presented here was a light atmospheric gas oil (LAGO) having the same properties and composition as given above in Table I. It should be mentioned here that, even though LAGO was used as the feed in the examples, the catalysts of the present invention are applicable for processing various hydrocarbon feed fractions ranging from naphthas and middle distillates to vacuum gas oils and resids.

The Sulphur and Nitrogen concentrations of the feed and product samples were determined by X-ray fluorescence (XRF), ASTM# D2622 and chemiluminescence techniques, respectively. The weight proportion of aromatics in the feed as well as in the product samples was measured by Supercritical Fluid Chromatography (SFC), ASTM #5186.

The three sets of reaction conditions employed in the present experimental evaluations, namely:

(i) 340°C temperature, 800 psig (5.5 MPa) total pressure, LHSV = 2.0 and $H_2$ flow rate = 2000 SCFB (360 $m^3/m^3$);

(ii) 380°C temperature, 1500 psig (10.4 MPa) total pressure, LHSV=1.0 and $H_2$ flow=4000 SCFB (720 $m^3/m^3$), and

(iii) 385°C temperature, 1500 psig (10.4 MPa) total pressure, LHSV=2.0 and $H_2$ flow=4000 SCFB (720 $m^3/m^3$)

were chosen in such a way that only partial HDS and HDN occurred under the first set of conditions, and only partial HDAr occurred under the second and third sets of conditions.

This helps in comparison of the HDS, HDN and HDAr activities of different catalysts at identical reaction conditions, in order to rank them.

Table III presents the results of catalyst evaluations under the first set of reaction conditions for the hydroprocessing of the LAGO, the properties of which are given in Table I. Presented in Table III, in the order of the number of column, are the run number, catalyst description, weight proportion of Zn in the catalyst, % HDS, and % HDN. The results presented are on EQUAL CATALYST VOLUME basis. The liquid hourly space velocity (LHSV), process temperature, total pressure and rate of hydrogen flow for all the experiments were 2.0 $h^{-1}$, 340°C, 800 psig (5.5 MPa) and 2000 SCFB (360 $m^3/m^3$), respectively.

Table III:

| Results of Catalyst Evaluations | | | | | |
|---|---|---|---|---|---|
| Run # | Catalyst | Catalyst Description | wt% Zn | % HDS | % HDN |
| 1 | C1 | (Ni + Zn-Mo / Carbon | 3 | 90.6 | 48.6 |
| 2 | C2* | Ni-Mo / Carbon | 0 | 91.8 | 45.8 |
| 3 | C3* | Ni-Mo / Carbon | 0 | 92.8 | 46.2 |
| 4 | C4 | (Ni + Zn)-(W + B)/Carbon | 2 | 91.1 | 53.4 |
| 5 | C5* | Ni-(W + B) / Carbon | 0 | N.D. | N.D. |

N.D. = Not Determined

Table IV presents the results of catalyst evaluation under the second set of reaction conditions for hydroprocessing of the LAGO, the properties of which are given in Table I. Presented in Table IV, in the order of the number of column, are the catalyst, catalyst description, weight proportion of Zn in the catalyst, % HDS, % HDN, % HDAr, and the first order rate constant for HDAr. The results presented are on EQUAL CATALYST VOLUME basis. The liquid hourly space velocity (LHSV), process temperature, total pressure and rate of hydrogen flow for all the experiments in Table IV were 1.0 $hr^{-1}$, 380°C, 1500 psig (10.4 MPa) and 4000 SCFB (720 $m^3/m^3$), respectively.

Table IV:

| Results of Catalyst Evaluations | | | | | | |
|---|---|---|---|---|---|---|
| Catalyst | Catalyst Description | Wt% Zn Added | % HDS | % HDN | % HDAr | $k_1$(HDAr) |
| C1 | (Ni + Zn)-Mo/Carbon | 3 | 99.7 | 99.4 | 62.8 | 0.99 |
| C2* | Ni-Mo/Carbon | None | 99.9 | 99.8 | 51.9 | 0.73 |
| C3* | Ni-Mo/Carbon | None | N.D. | 100 | 52.2 | 0.74 |

N.D. = Not Determined

Table V presents the results of catalyst evaluation under the third set of reaction conditions for the hydroprocessing of the LAGO, the properties of which are given in Table I. Presented in Table V, in the order of number of column, are the catalyst, catalyst description, weight proportion of Zn in the Catalyst, % HDS, % HDN, % HDAr, and the first order rate constant for HDAr. The results presented are on EQUAL CATALYST VOLUME basis. The liquid hourly space velocity (LHSV), process temperature, total pressure and rate of hydrogen flow for all the experiments in Table V were 2.0 $hr^{-1}$, 385°C, 1500 psig (10.4 MPa) and 4000 SCFB (720 $m^3/m^3$), respectively.

Table V:

| Results of Catalyst Evaluation | | | | | | |
|---|---|---|---|---|---|---|
| Catalyst | Catalyst Description | Wt%Zn Added | %HDS | %HDN | %HDAr | $k_1$(HDAr) |
| C4 | (Ni + Zn)-(W + B) / Carbon | 2 | 99.5 | 99.0 | 58.0 | 1.74 |
| C5* | Ni-(W + B) / Carbon | None | 99.8 | 99.0 | 53.9 | 1.55 |

The following observations/conclusions can be made from the data presented in Tables III, IV and V.

(a) The zinc promoted carbon supported catalysts of the present invention are clearly significantly more active for the Hydrodearomatisation of LAGO than the carbon supported catalysts that do not contain zinc. From the first order rate constant values for HDAr, promoting the catalyst with as little as 3% by weight of zinc improved the HDAr activity of the catalyst by as much as 35%. An improvement of this magnitude is not possible with any teachings in the art. It is quite unexpected and is unattainable without the present inventive concept.
(b) Zinc promotion seems to improve the HDN activity of the catalysts, though not very significantly.
(c) Under the reaction conditions necessary to effect significant aromatics saturation, both the HDS and HDN conversions approach 100%.

## Claims

1. A process for treating a charge hydrocarbon feed containing undesired aromatic components, sulphur and nitrogen compounds, which process comprises:

maintaining a bed of sulphided catalyst comprising 0.1 to 15% by weight of one or more non-noble Group VIII metals selected from nickel, cobalt and iron; and from 1 to 50% by weight of tungsten and/or from 1 to 20% by weight of molybdenum or chromium, and 0.01 to 10% by weight of zinc, on an activated carbon support, said activated carbon support having a Brunauer-Emmett-Teller (B.E.T.) surface area of at least 600 $m^2$/g, a pore volume for nitrogen of at least 0.3 $cm^3$/g and an average pore diameter of at least 12 Angstroms;
passing a charge hydrocarbon feed in the presence of a gas selected from pure hydrogen and a gas mixture comprising greater than 60% by volume pure hydrogen into contact with said catalyst under hydrotreating conditions, thereby effecting hydrogenation, hydrodearomatisation, hydrodesulphurisation and hydrodenitrogenation of said charge hydrocarbon feed and forming a product stream of hydrocarbon containing a lesser concentration of undesired aromatic components, sulphur and nitrogen, and
recovering said product stream of hydrocarbon containing a lesser concentration of undesired aromatic components, sulphur and nitrogen.

2. A process as claimed in claim 1, wherein the hydrotreating conditions include a temperature of 200-450°C, a pressure of 200-3000 psig (1.4-21 MPa), a liquid hourly space velocity of 0.1-10 $h^{-1}$ and a hydrogen feed rate of 200-10,000 SCFB (36-1800 $m^3$/$m^3$).

3. A process as claimed in claim 1 or claim 2 wherein said hydrotreating conditions include a temperature of 300-410°C, a pressure of 400-2500 psig (2.8-17.3 MPa), a liquid hourly space velocity of 0.5-4 $h^{-1}$ and a hydrogen feed rate of 1000-6000 SCFB (180-1080 $m^3$/$m^3$).

4. A process as claimed in any preceding claim wherein the hydrocarbon charge is selected from light, full range or heavy naphthas, middle distillates, gas oils, diesel fuels, aviation fuels, vacuum gas oils and residua, or mixtures thereof derived from petroleum, coal, shale, tar sands, and mixtures thereof.

5. A process as claimed in any preceding claim wherein the carbon supported catalyst contains 2 to 12% by weight nickel, 10 to 45% by weight tungsten and 0.01 to 5% by weight zinc.

6. A process as claimed in any preceding claim wherein the carbon supported catalyst contains 20 to 40% by weight tungsten and, optionally, 10 to 15% chromium and/or molybdenum.

7. A process as claimed in any one of claims 1 to 4 wherein the carbon supported catalyst consists essentially of 2 to 12% by weight nickel, 0.01 to 10% by weight of zinc and, optionally, 1 to 12% by weight cobalt and/or iron.

8. A process as claimed in any preceding claim wherein the carbon supported catalyst contains 2 to 5% by weight zinc.

9. A process as claimed in any preceding claim wherein the carbon supported catalyst contains additional promoters selected from the group consisting of 0.01 to 4% by weight boron, 0.01 to 4% by weight phosphorus, and 0.01 to 4% by weight fluorine, or mixtures thereof.

10. A process as claimed in any preceding claim wherein said carbon support is characterised by a B.E.T. surface area of 600 to 2000 m$^2$/g, a total pore volume for nitrogen of at least 0.3 cc/g and an average pore diameter, calculated from nitrogen physisorption, of 12 to 100 Angstroms.

11. A process as claimed in any preceding claim wherein the carbon support has 20 to 80% of its pore volume in pores of 20-500 Angstroms diameter.

12. A catalyst composition useful for hydrotreatment of hydrocarbon oils, characterised in that it comprises:
0.1 to 15% by weight of one or more non-noble Group VIII metals selected from nickel, cobalt and iron; from 1 to 50% by weight of tungsten and/or from 1 to 20% by weight of molybdenum or chromium, and 0.01 to 10% by weight of zinc, on an activated carbon support, said activated carbon support having a Brunauer-Emmett-Teller (B.E.T.) surface area of at least 600 m$^2$/g, a pore volume for nitrogen of at least 0.3 cm$^3$/g and an average pore diameter of at least 12 Angstroms.

13. A catalyst composition as claimed in claim 12 wherein the activated carbon support has a B.E.T. surface area from 600 to 2000 m$^2$/g, an average pore diameter from 12 to 100 Angstroms and 20-80% of its pore volume comprising pores of 20-500 Angstroms diameter.